# EUROPEAN PATENT APPLICATION

(11) **EP 2 579 126 A1**
(43) Date of publication of application: **10.04.2013**
(21) Application number: 12803502.9
(22) Date of filing: 25.06.2012
(51) Int. Cl.: G06F 1/32

(54) **METHOD FOR CONTROLLING STATE OF MOBILE TERMINAL AND MOBILE TERMINAL**

(30) Priority: 29.06.2011 CN 201110179843
(71) Applicant: Huawei Device Co., Ltd., Longgang District Shenzhen Guangdong 518129 (CN)
(72) Inventor: LI, Yingshu, Shenzhen Guangdong 518129 (CN)
(74) Representative: Kreuz, Georg Maria
(86) International application number: PCT/CN2012/077428
(87) International publication number: WO 2013/000381

(57) **Abstract**

The present invention discloses a method for controlling mobile terminal status and a mobile terminal, which relate to the field of portable electronic devices, and solve the problem in the prior art where the mobile terminal cannot identify an input instruction obtained due to a non-manual operation and therefore fails to enter a standby state. The technical solutions include: acquiring an environment image obtained through a front camera module; and performing face recognition for the acquired environment image, and if no face figure is recognized from the acquired environment image, making the mobile terminal enter a standby state. The method for controlling mobile terminal status and the mobile terminal provided in embodiments of the present invention can be applied to the field related to mobile terminals.

## Description

This application claims priority to Chinese Patent Application No. 201110179843.9, filed with the Chinese Patent Office on June 29, 2011 and entitled "METHOD FOR CONTROLLING MOBILE TERMINAL STATUS AND MOBILE TERMINAL", which is hereby incorporated by reference in its entirety.

### FIELD OF THE INVENTION

The present invention relates to the field of a mobile terminal, and in particular to a method for controlling mobile terminal status and a mobile terminal.

### BACKGROUND OF THE INVENTION

A mobile terminal (for example, a mobile phone and a tablet computer) normally has two states: one is a working state, in which the mobile terminal receives an input instruction in a preset period and keeps power supply to the screen; the other state is a standby state, which is related to the working state and means that the input interface (such as keypad input port, touch-screen input port, and optical mouse input port) of the mobile terminal does not receive an input instruction in a preset period and automatically stops power supply to the screen, that is, a blank screen state.

The input instructions received by the mobile terminal include manually input correct input instructions and input instructions obtained not due to manual operations. The input instructions obtained not due to manual operations easily occur at a mobile terminal with a touch-screen, a trackball, and/or an optical mouse. For example, a mobile terminal with a touch-screen, especially a capacitive touch-screen, will encounter non-manual operations: In principle, a capacitive touch-screen uses human body as an electric pole of a capacitor element. When a conductor approaches to couple sufficient capacitance with the interlayer transparent conductive film ITO work surface, the lost current is enough to incur non-manual operations of the capacitive touch-screen. The capacitance is in reverse proportion to the distance between poles, but is in proportion to the relative area, and is further related to the insulation coefficient of the medium. When a large hand or a handhold conductor approaches the capacitive touch-screen before a finger touches the screen, non-manual operations may occur on the capacitive touch-screen. This case is especially true in humid weather conditions. Non-manual operations on the capacitive touch-screen would occur when a hand holds the display, a hand is less than 7 cm near the display, or the body is less than 15 cm near the display.

When developing the embodiments of the present invention, the inventor finds at least the following disadvantages of the method according to the prior art:

A mobile terminal cannot determine whether an input instruction received by its input port is a manually input correct input instruction or an input instruction obtained due to a non-manual operation. If the mobile terminal receives an input instruction obtained due to a non-manual operation in a preset period, the mobile terminal will fail to enter the standby state, thereby reducing the smart interaction capability of the mobile terminal with a user.

### SUMMARY OF THE INVENTION

Embodiments of the present invention provide a method for controlling mobile terminal status and a mobile terminal to solve the problem in the prior art that the mobile terminal cannot identify an input instruction obtained due to a non-manual operation and therefore fails to enter the standby state.

To meet the objectives, the embodiments of the present invention adopt the following technical solutions:

A method for controlling mobile terminal status is applied to a mobile terminal with a front camera module, and includes: acquiring an environment image obtained through the front camera module; and performing face recognition for the acquired environment image, and if no face figure is recognized from the acquired environment image, making the mobile terminal enter a standby state.

A mobile terminal with a front camera module includes:
one or more processors;
a memory; and
one or more programs, where the one or more programs are stored in the memory and are configured to be executed by the one or more processors, and the one or more programs include:
   an instruction for acquiring an environment image, where the environment image is obtained through the front camera module;
   an instruction to perform face recognition for the acquired environment image; and
   an instruction for entering a standby state if no face figure is recognized from the acquired environment image.

Amobile terminal includes:
a front camera module, configured to acquire an environment image;
a face recognition apparatus, configured to perform face recognition for the environment image acquired by the front camera module, and generate a recognition result; and
a standby apparatus, configured to determine whether to change a state of the mobile terminal according to the recognition result of the face recognition apparatus.

According to the method for controlling mobile terminal status and the mobile terminal provided in the embodiments of the present invention, as the mobile terminal has a front camera module, face recognition for the environment image acquired through the front camera module is performed. If no face figure is recognized from the acquired environment image, it indicates that no face appears in a certain range in front of the mobile terminal at the time when the front camera acquires the environment image. Therefore, no user needs to perform operations on the mobile terminal at the time when the front camera acquires the environment image. The mobile terminal wastes unnecessary electrical power and needs to enter the standby state. As such, the mobile terminal enters the standby state, thereby avoiding the problem where the mobile terminal receives an input instruction obtained due to a non-manual operation and thereby cannot enter the standby state, saving the battery volume, and improving smart interaction capability of the device with the user.

### BRIEF DESCRIPTION OF THE DRAWINGS

FIG. 1 is a flow chart of a method for controlling mobile terminal status according to Embodiment 1 of the present invention;

FIG. 2 is a flow chart of a method for controlling mobile terminal status according to Embodiment 2 of the present invention;

FIG. 2 (a) is a flow chart of step 202 in the method for controlling mobile terminal status as shown in FIG. 2;

FIG. 3 is a schematic structural diagram of a mobile terminal with a front camera module according to Embodiment 3 of the present invention;

FIG. 4 is a first schematic structural diagram of a mobile terminal according to Embodiment 5 of the present invention;

FIG. 5 is a second schematic structural diagram of the mobile terminal according to Embodiment 5 of the present invention; and

FIG. 6 is a schematic structural diagram of a portable communication device according to Embodiment 6 of the present invention.

### DETAILED DESCRIPTION OF THE EMBODIMENTS

To solve the problem in the prior art where the mobile terminal cannot identify an input instruction obtained due to a non-manual operation and therefore fails to enter the standby state, embodiments of the present invention provide a method for controlling mobile terminal status and a mobile terminal.

### Embodiment 1

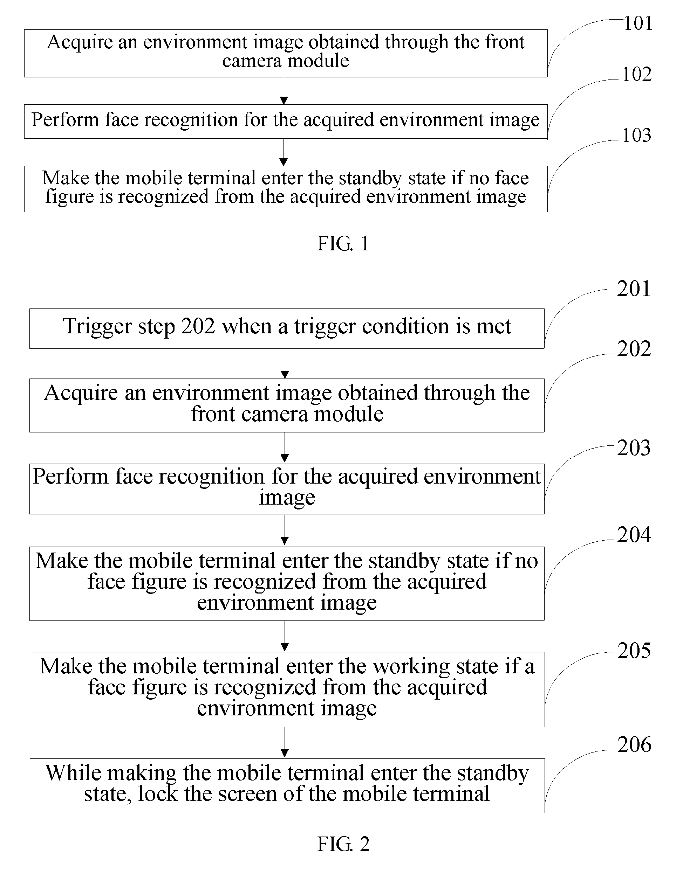

As shown in FIG. 1, the method for controlling mobile terminal status according to this embodiment is used for a mobile terminal with a front camera module, and includes:

Step 101: Acquire an environment image obtained through the front camera module.

The mobile terminal may be a mobile terminal that has a front camera and provides multiple functions (such as communication, PDA, and music player functions). The mobile terminal has a user interface, and supports multiple application programs. For example, telephone application program, video conference application program, e-mail application program, instant message transport application program, blog application program, digital camera application program, web browsing application program, digital music player application program, and so on. The front camera module is at a same plane with the display of the mobile terminal.

In this embodiment, the environment image is an image in a certain range in front of the mobile terminal that may be acquired by the front camera module.

Step 102: Perform face recognition for the acquired environment image.

The face recognition technology may be implemented through corresponding hardware or corresponding program, and is already widely used in the photograph field. Specifically, the face recognition technology includes: head figure capturing, which captures the head figure by comparing each figure that exists in the environment image through a feature library; and face figure determining, which judges whether the head figure includes head features such as eyes and mouth through the feature library. If the head figure includes head features such as eyes and mouth, the head figure is a face figure, and a face figure is recognized in the environment image. Otherwise, no face figure is recognized in the environment image.

Step 103: Make the mobile terminal enter a standby state if no face figure is recognized from the acquired environment image.

In this embodiment, if no face figure is recognized in the acquired environment image, it indicates that no face appears in a certain range in front of the mobile terminal at the time when the front camera acquires the environment image. That is, no user needs to perform operations on the mobile terminal at the time when the front camera acquires the environment image, thereby making the mobile terminal enter the standby state. Specifically, making the mobile terminal enter the standby state includes: During face recognition for the acquired environment image when the mobile state is the standby state, if no face figure is recognized from the acquired environment image, keeping the standby state of the mobile terminal; or, during face recognition for the acquired environment image when the mobile state is a working state, if no face figure is recognized from the acquired environment image, making the mobile terminal enter the standby state from the working state.

According to the method for controlling mobile terminal status provided in this embodiment, as the mobile terminal has a front camera module, face recognition for the environment image acquired through the front camera module is performed. If no face figure is recognized from the acquired environment image, it indicates that no face appears in a certain range in front of the mobile terminal at the time when the front camera acquires the environment image. Therefore, no user needs to perform operations on the mobile terminal at the time when the front camera acquires the environment image. The mobile terminal enters the standby state, thereby avoiding the problem where the mobile terminal fails to identify a received input instruction obtained due to a non-manual operation and thereby cannot enter the standby state, saving the battery volume, and improving smart interaction capability of the device with the user.

For easy understanding by persons skilled in the art, the following describes in detail the method for controlling mobile terminal status provided in Embodiment 2. The method for controlling mobile terminal status according to this embodiment is used for a mobile terminal with a front camera module.

### Embodiment 2

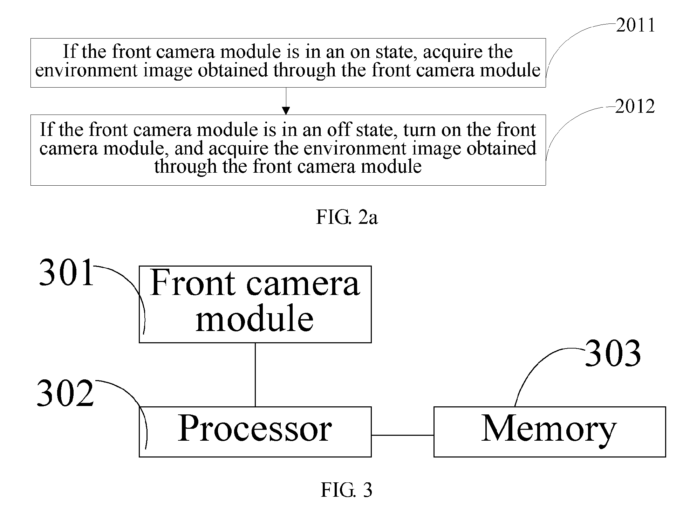

As shown in FIG. 2, the method for controlling mobile terminal status according to this embodiment is used for a mobile terminal with a front camera module, and specifically includes:

Step 201: Trigger step 202 when a trigger condition is met.

In this embodiment, the trigger condition specifically includes: the mobile terminal is in a standby state and receives an input instruction. The step 201 is specifically: trigger step 202 when the mobile terminal is in a standby state and receives an input instruction.

The trigger condition specifically further includes: the mobile terminal is in a working state and does not receive an input instruction in a preset period. Step 201 is specifically: when the mobile terminal is in a working state and does not receive an input instruction in a preset period, trigger step 202. For example, the mobile terminal is providing a reading interface for a user, and the user is reading text and does not deliver any input instruction to the mobile terminal. In this case, the user still needs to acquire information from the screen of the mobile terminal. By acquiring the environment image through the trigger condition, it may be judged that the mobile terminal does not receive an input instruction in the preset period and still needs to maintain the working state.

The trigger condition specifically further includes: the mobile terminal is in a working state and receives a regular trigger instruction. The regular trigger instruction is obtained according to a preset regular trigger condition. The preset regular trigger condition includes a triggering time interval. For example, the regular triggering time interval is 10 s. Then when the mobile terminal is in the working state, it sends a regular trigger instruction every 10 s. The preset regular trigger condition is not restricted to the preceding content and is not described herein in detail. Step 201 is specifically: when the mobile terminal is in a working state and receives a regular trigger instruction, trigger step 202.

Step 202: Acquire an environment image obtained through the front camera module.

In this embodiment, as shown in FIG. 2 (a), step 202 specifically includes:

Step 2021: If the front camera module is in an on state, acquire the environment image obtained through the front camera module.

In this embodiment, the on state includes the state in which the power module of the mobile terminal supplies power to the front camera module. In this case, the front camera module is using the photograph function for shooting, using the recording function for recording (that is, streaming media recording), or in a shooting ready or recording ready state. When the environment image needs to be acquired, the front camera module is using the photograph function for shooting or recording function for recording, the image obtained by the front camera module serves not only as the image required by the photograph function or recording function, but also as an environment image and is acquired.

Step 2012: If the front camera module is in an off state, turn on the front camera module, and acquire the environment image obtained through the front camera module.

The off state includes the case where the power module of the mobile terminal does not supply power to the front camera module.

Step 203: Perform face recognition for the acquired environment image.

The face recognition technology may be implemented through corresponding hardware or corresponding program, and is already widely used in the photograph field. Face recognition technologies that are widely applied include:

Face recognition method based on geometric features: The geometric features may be shapes of eyes, nose, and mouth and geometric relationship between them (for example, distance between each other). The recognition speed of these algorithms is high, and the required memory is small. This method is preferred herein.

The face recognition technologies further include: principle component analysis (PCA) based face recognition method, neurological network face recognition method, elastic graph matching face recognition method, linear Hausdorff distance (LHD) face recognition method, support vector machine (SVM) face recognition method, and so on, which are not described herein.

Step 204: Make the mobile terminal enter the standby state if no face figure is recognized from the acquired environment image.

Further, to ensure the accuracy of the mobile terminal in the standby state, step 204 includes:

If no face figure is recognized from the acquired environment image, perform step 202 to acquire the environment image again and perform face recognition for the acquired environment image again. If no face figure appears in the acquired environment image in a preset period or for multiple times, make the mobile terminal enter the standby state.

Specifically, if no face figure is recognized from the acquired environment image, repeat step 201 and step 202 in a preset period (for example, 1 minute). If no face figure appears in the environment image acquired for multiple times in a preset period, make the mobile terminal enter the standby state.

Optionally, if no face figure is recognized from the acquired environment image, repeat step 201 and step 202 for preset times (for example, 20 times). If no face figure appears in the environment image acquired for preset times, make the mobile terminal enter the standby state.

Step 205: Make the mobile terminal enter the working state if a face figure is recognized from the acquired environment image.

Further, to prevent the mobile terminal from entering the working state due to a non-manual action after entering the standby state, the method for controlling mobile terminal status further includes:

Step 206: While making the mobile terminal enter the standby state, lock the screen of the mobile terminal.

According to the method for controlling mobile terminal status provided in this embodiment, as the mobile terminal has a front camera module, face recognition for the environment image acquired through the front camera module is performed. If no face figure is recognized from the acquired environment image, it indicates that no face appears in a certain range in front of the mobile terminal at the time when the front camera acquires the environment image. Therefore, no user needs to perform operations on the mobile terminal at the time when the front camera acquires the environment image. The mobile terminal locks the screen, thereby avoiding the problem where the mobile terminal fails to identify a received input instruction obtained due to a non-manual operation and thereby cannot enter the standby state, saving the battery volume, and improving smart interaction capability of the device with the user.

### Embodiment 3

As shown in FIG. 3, Embodiment 3 provides a mobile terminal with a front camera module 301, including:
one or more processors 302;
a memory 303; and
one or more programs, where the one or more programs are stored in the memory 303 and are configured to be executed by the one or more processors 302, and the one or more programs include:
   an instruction for acquiring an environment image, where the environment image is obtained through the front camera module 301; an instruction to perform face recognition for the acquired environment image; and an instruction for entering a standby state if no face figure is recognized from the acquired environment image.

Specifically, before acquiring the environment image, the one or more programs further include: an instruction for setting a trigger condition.

The instruction for acquiring an environment image specifically includes:
an instruction for acquiring the environment image obtained through the camera module when the trigger condition is met.

The trigger condition includes: the mobile terminal is in the standby state and receives an input instruction, the mobile terminal is in a working state and does not receive an input instruction in a preset period, or the mobile terminal is in the working state and receives a regular trigger instruction.

The mobile terminal with the front camera module provided in this embodiment includes a processor and a memory. The processor performs face recognition for the environment image acquired through the front camera module. If no face figure is recognized from the acquired environment image, it indicates that no face appears in a certain range in front of the mobile terminal at the time when the front camera acquires the environment image. Therefore, no user needs to perform operations on the mobile terminal at the time when the front camera acquires the environment image. The mobile terminal locks the screen, thereby avoiding the problem where the mobile terminal fails to identify a received input instruction obtained due to a non-manual operation and thereby cannot enter the standby state, saving the battery volume, and improving smart interaction capability of the device with the user.

### Embodiment 4

Embodiment 4 provides a computer-readable storage medium that stores one or more programs. The one or more programs include an instruction. The instruction makes the device execute the following operations when being executed by a mobile terminal with a front camera module:
acquire an environment image obtained through the front camera module. The specific implementation manner is the same as step 202 as shown in FIG. 2, and is not described herein again.
perform face recognition for the acquired environment image. The specific implementation manner is the same as step 203 as shown in FIG. 2, and is not described herein again.
make the mobile terminal enter a standby state if no face figure is recognized from the acquired environment image. The specific implementation manner is the same as step 204 as shown in FIG. 2, and is not described herein again.

Further, the instruction makes the device further execute the following operations when being executed by the mobile terminal with the front camera module:

Before the acquiring an environment image obtained through the camera module, the method further includes setting a trigger condition; and triggering the step for acquiring the environment image obtained through the camera module when the trigger condition is met. The specific implementation manner is the same as step 201 as shown in FIG. 2, and is not described herein.

The trigger condition includes: the mobile terminal is in the standby state and receives an input instruction, the mobile terminal is in a working state and does not receive an input instruction in a preset period, or the mobile terminal is in the working state and receives a regular trigger instruction.

### Embodiment 5

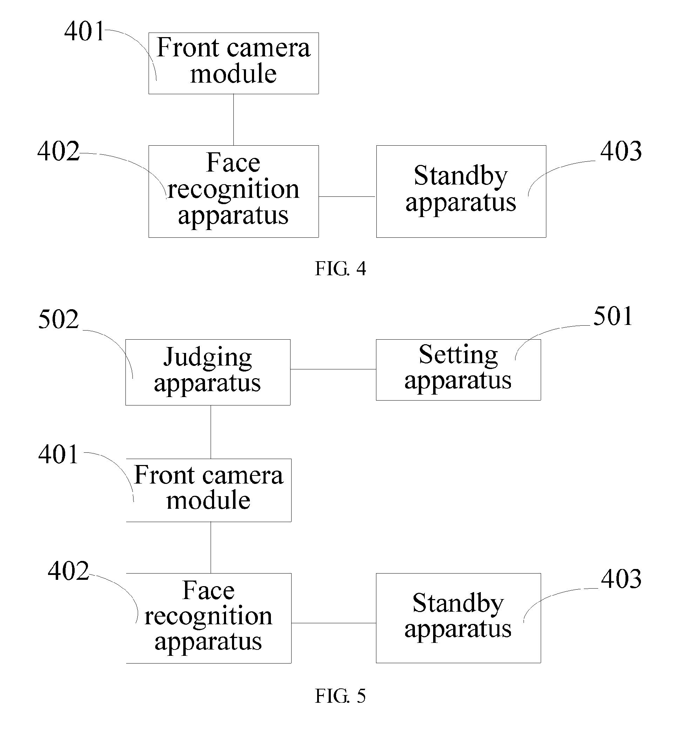

As shown in FIG. 4, the mobile terminal provided in this embodiment includes:
a front camera module 401, configured to acquire an environment image;
a face recognition apparatus 402, configured to perform face recognition for the environment image acquired by the front camera module, and generate a recognition result; and
a standby apparatus 403, configured to determine whether to change a state of the mobile terminal according to the recognition result of the face recognition apparatus.

Further, as shown in FIG. 5, the mobile terminal further includes:
a setting apparatus 501, configured to set a trigger condition, where the trigger condition includes: the mobile terminal is in a standby state and receives an input instruction, the mobile terminal is in a working state and does not receive an input instruction in a preset period, or the mobile terminal is in the working state and receives a regular trigger instruction; and
a judging apparatus 502, configured to judge whether the trigger condition is met;
if the judging apparatus judges that the trigger condition is met, send a trigger signal, where the trigger signal is configured to trigger the camera module to acquire an environment image.

According to the mobile terminal provided in this embodiment, as the mobile terminal has a front camera module, a face recognition apparatus, and a standby apparatus, face recognition for the environment image acquired through the front camera module is performed. If no face figure is recognized from the acquired environment image, it indicates that no face appears in a certain range in front of the mobile terminal at the time when the front camera acquires the environment image. Therefore, no user needs to perform operations on the mobile terminal at the time when the front camera acquires the environment image. The mobile terminal locks the screen, thereby avoiding the problem where the mobile terminal fails to identify a received input instruction obtained due to a non-manual operation and thereby cannot enter the standby state, saving the battery volume, and improving smart interaction capability of the device with the user.

The following describes implementation manners in detail. The examples of the implementation manners are shown in the attached drawings. To help deeply understand the present invention, various specific details will be provided in the detailed description. However, for persons skilled in the art, it is apparently understandable that the present invention may be implemented without these specific details. In other cases, methods, processes, components, circuits, and networks widely known are not described in detail to avoid unnecessarily making various aspects of the implementation manners unclear.

### Embodiment 6

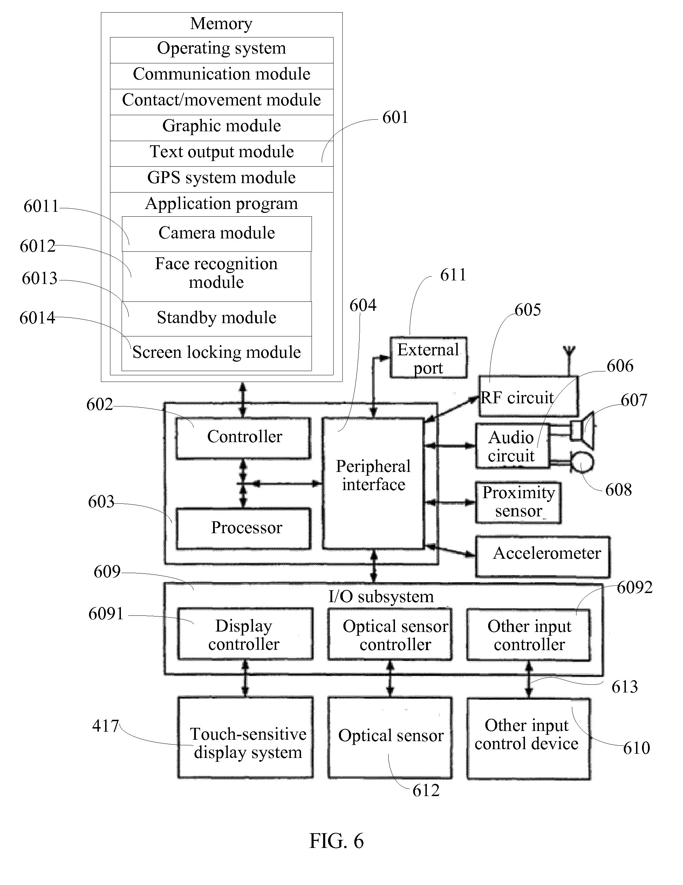

The following provides specific description by using a portable communication device with a front camera module as an example. As shown in FIG. 6, the device includes a memory 601 (which may include one or more storage media that may be read by a computer), a memory controller 602, one or more central processors (CPU) 603, a peripheral interface 604, an RF circuit 605, an audio circuit 606, a loudspeaker 607, a microphone 608, an input/output (I/O) subsystem 609, other input/control devices 610, and an external port 611. The device may include one or more optical sensors 612. These components perform communication via one or more communication buses or signal lines 613.

It should be noted that the portable electronic communication device with the front camera module provided in this embodiment is merely an example of a mobile terminal. The mobile terminal involved in the present invention may have more or less components than that as shown in FIG. 6, may combine two or more components, or may have different component configurations or settings. All components may be implemented by hardware that includes one or more signal processing and/or dedicated integrated circuits, software, or a combination of hardware and software.

The following describes the portable electronic communication device with the front camera module provided in this embodiment in detail.

Memory 601: The memory 601 may be accessed by the CPU 603, peripheral interface 604, and so on. Specifically, access by the CPU 603, peripheral interface 604, and so on to the memory 601 may be controlled by the memory controller 401. The memory 601 may include a high speed random access memory and may further include a non-volatile memory, for example, one or more disk memory components, flash components, or other volatile solid state memory components. The software programs stored in the memory 601 may include an operating system, a communication module, a contact/movement module, a graphic module, a text output module, a global positioning system module, and application programs. The application programs include but are not limited to a camera module 6011, a standby module 6012, and a face recognition module 6013.

Peripheral interface 604: The peripheral interface may connect input and output peripherals of the device to the CPU 603 and memory 601.

I/O subsystem 609: The I/O subsystem 609 may connect input/output peripherals on the device such as the touch-screen 617 and other input/control devices 610 to the peripheral interface 604. The I/O subsystem 609 may include a display controller 6091 and one or more input controllers 6092 that are configured to control other input/control devices 610. The one or more input controllers 6092 receive electrical signals from the other input/control devices 610, or send electrical signals to the other input/control devices 610. The other input/control devices 610 may include physical buttons (press button, rocker arm button, and so on), a dial pad, a slider switch, a joystick, and a click roll. It should be noted that the input controller 6092 may be connected to any one of the following: keypad, infrared port, USB interface, and instruction device such as a mouse.

Touch-screen 617: The touch-screen 617 is the input interface and output interface between the device and a user, and displays visible output to the user. The visible output includes graphs, text, icons, videos, and so on.

The display controller 6091 in the I/O subsystem 609 receives electrical signals from the touch-screen 617 or sends electrical signals to the touch-screen 617. The touch-screen 617 detects contacts on the touch-screen. The display controller 6091 converts the detected contacts into interaction of user interface objects displayed on the touch-screen 617, that is, implements man-machine interaction. The user interface objects displayed on the touch-screen 617 may be an icon for running a game, an icon for connecting to a corresponding network, and so on. It should be noted that the device may further include an optical mouse. The optical mouse is a touch-sensitive surface that does not display visible output, or an extension of the touch-sensitive surface formed by the touch-screen.

Optical sensor 612: The optical sensor 612 is controlled by an optical sensor controller 614. The optical sensor controller 614 is connected to the I/O subsystem 609. The optical sensor 612 may include a charge-coupled device CCD or complementary metal oxide semiconductor CMOS photoelectric transistor. The optical sensor receives light projected through one or more lenses from the environment, and converts the light into data that indicates an image.

Specifically, the communication device includes a front camera module, a face recognition apparatus, and a standby apparatus. The front camera module includes one or more optical sensors 612 located at the front side of the device (the same side with the touch-screen of the device) and a camera module 6011. The face recognition apparatus includes a face recognition module 6012. The standby apparatus includes a standby module 6013.

The CPU 603 invokes the optical sensor 612 and camera module (also called imaging module) 6011, and may capture images or videos.

When the device is in a standby state, if the peripheral interface 604 receives, through the I/O subsystem 609, an input instruction sent as the touch-screen 617 or press button 610 is pressed, the peripheral interface 604 sends the received input instruction to the CPU 603. Upon receiving the input instruction, the CPU 603 sends a request to the memory controller 602 to make the CPU 603 access the memory 601 through the memory controller 602 and invoke the standby module 6013 in the memory 601. Or,

When the device is in a working state, if the peripheral interface 604 does not receive an input instruction within a preset period, the CPU 603 sends a request to the memory controller 602 to make the CPU 603 access the memory 601 through the memory controller 602 and invoke the standby module 6013 in the memory 601. Or,

When the device is in the working state, if the CPU 603 receives a regular trigger instruction, the CPU 603 sends a request to the memory controller 602 to make the CPU 603 access the memory 601 through the memory controller 602 and invoke the standby module 6013 in the memory 601. The regular trigger instruction is generated according to a preset regular trigger condition. The preset regular trigger condition may be parameters such as trigger time interval.

The procedure in which the CPU 603 executes the corresponding program or instruction set in the standby module 6013 specifically includes:

The CPU 603 requests the memory controller 602 to invoke the camera module 6011, and controls an optical sensor controller 614 through the peripheral interface 604 to invoke the optical sensor 612 to implement acquisition of the environment image.

After acquiring the environment image, the CPU 603 requests the memory controller 602 to invoke the face recognition module 6012 to implement face recognition for the environment image.

If no face figure is recognized from the environment image, the CPU 603 cuts off power to the touch-screen 617 so that the touch-screen is in the standby state; otherwise, the CPU 603 supplies power to the touch-screen 617 so that the touch-screen is in the working state.

Further, the memory 601 further includes a screen locking module 6014. After invoking the standby module 6013, the CPU 603 invokes the screen locking module 6014 to lock the touch-screen 617.

Further, to ensure accuracy for the device entering the standby state, if no face figure is recognized from the acquired environment image, the CPU 603 will invoke the camera module 6011, optical sensor 612, and face recognition module 6012 multiple times. If no face figure appears in the environment image acquired in a preset period or for multiple times, the CPU 603 makes the mobile terminal enter the standby state.

It should be noted that when the CPU 403 invokes the optical sensor 612 and camera module 6011, if it is found that the optical sensor 612 and camera module 6012 have been invoked simultaneously during invoking, it indicates that the front camera module is already in the working state, for example, video conference state. Then the CPU 603 only needs to acquire the current image of the front camera module and use the current image of the front camera module as the environment image.

According to the portable communication device with a front camera module provided in this embodiment, as the portable communication device has a front camera module, face recognition for the environment image acquired through the front camera module is performed. If no face figure is recognized from the acquired environment image, it indicates that no face appears in a certain range in front of the portable communication device at the time when the front camera acquires the environment image. Therefore, no user needs to perform operations on the portable communication device at the time when the front camera acquires the environment image. The portable communication device wastes unnecessary electrical power and needs to enter the standby state. As such, the portable communication device enters the standby state, thereby avoiding the problem where the mobile terminal fails to identify a received input instruction obtained due to a non-manual operation and thereby cannot enter the standby state, saving the battery volume, and improving smart interaction capability of the device with the user.

The method for controlling mobile terminal status and the mobile terminal provided in the embodiments of the present invention may apply to the field related to mobile terminals.

Persons of ordinary skill in the art should understand that all or a part of the steps of the methods in the embodiments may be implemented by a program instructing relevant hardware. The program may be stored in a computer readable storage medium, such as a ROM/RAM, a magnetic disk, or an optical disk.

The foregoing descriptions are merely exemplary embodiments of the present invention, but not intended to limit the protection scope of the present invention. Any variation or replacement that can be easily made by persons skilled in the art without departing from the technical scope disclosed by the present invention shall fall within the protection scope of the present invention. Therefore, the protection scope of the present invention shall be subject to the protection scope of the claims.

## Claims

1. A method for controlling mobile terminal status, used for a mobile terminal with a front camera module, comprising:
acquiring an environment image obtained through the front camera module; and
performing face recognition for the acquired environment image, and if no face figure is recognized from the acquired environment image, making the mobile terminal enter a standby state.

2. The method according to claim 1, wherein before the acquiring the environment image obtained through the front camera module, the method further comprises setting a trigger condition;
triggering the step for acquiring the environment image obtained through the camera module when the trigger condition is met.

3. The method according to claim 2, wherein the trigger condition specifically comprises:
the mobile terminal is in a standby state and receives an input instruction.

4. The method according to claim 2, wherein the trigger condition specifically comprises:
the mobile terminal is in a working state and does not receive an input instruction in a preset period.

5. The method according to claim 2, wherein the trigger condition specifically comprises:
the mobile terminal is in a working state and receives a regular trigger instruction.

6. The method according to any one of claims 1 to 5, wherein while the making the mobile terminal enter the standby state, the method further comprises: locking a screen of the mobile terminal.

7. The method according to any one of claims 1 to 6, wherein the method further comprises:
making the mobile terminal enter the working state if a face figure is recognized from the acquired environment image.

8. A mobile terminal with a front camera module, further comprising:
one or more processors;
a memory; and
one or more programs, wherein the one or more programs are stored in the memory and are configured to be executed by the one or more processors, and the one or more programs comprise:
an instruction for acquiring an environment image, wherein the environment image is obtained through the front camera module;
an instruction to perform face recognition for the acquired environment image; and
an instruction for entering a standby state if no face figure is recognized from the acquired environment image.

9. The mobile terminal according to claim 8, wherein before the acquiring the environment image, the one or more programs further comprise: an instruction for setting a trigger condition;
the instruction for acquiring an environment image specifically comprises:
an instruction for acquiring the environment image obtained through the camera module when the trigger condition is met; and
the trigger condition comprises: the mobile terminal is in the standby state and receives an input instruction, the mobile terminal is in a working state and does not receive an input instruction in a preset period, or the mobile terminal is in the working state and receives a regular trigger instruction.

10. A mobile terminal, comprising:
a front camera module, configured to acquire an environment image;
a face recognition apparatus, configured to perform face recognition for the environment image acquired by the front camera module, and generate a recognition result; and
a standby apparatus, configured to determine whether to change a state of the mobile terminal according to the recognition result of the face recognition apparatus.

11. The mobile terminal according to claim 10, further comprising:
a setting apparatus, configured to set a trigger condition, wherein the trigger condition comprises: the mobile terminal is in a standby state and receives an input instruction, the mobile terminal is in a working state and does not receive an input instruction in a preset period, or the mobile terminal is in the working state and receives a regular trigger instruction; and
a judging apparatus, configured to judge whether the trigger condition is met; and
if the judging apparatus judges that the trigger condition is met, send a trigger signal, wherein the trigger signal is configured to trigger the camera module to acquire an environment image.
